# EUROPÄISCHE PATENTSCHRIFT

(11) **EP 1 830 429 B1**
(45) Veröffentlichungstag und Bekanntmachung des Hinweises auf die Patenterteilung: **08.04.2009**
(21) Anmeldenummer: 07001855.1
(22) Anmeldetag: 29.01.2007
(51) Int. Cl.: H01M 10/16

(54) **Bleiakkumulator**
lead acid accumulator
accumulateur au plomb

(30) Priorität: 01.02.2006 DE 202006001509 U
(43) Veröffentlichungstag der Anmeldung: 05.09.2007
(73) Patentinhaber: VB Autobatterie GmbH & Co. KGaA, 30419 Hannover (DE)
(72) Erfinder: Johns, Sandra, 31157 Sarstedt (DE)
(74) Vertreter: Gerstein, Hans Joachim

(56) Entgegenhaltungen:
- EP-A- 0 399 599
- EP-A- 1 148 569
- JP-A- 63 252 363
- US-B1- 6 487 833

## Beschreibung

Die Erfindung betrifft einen Bleiakkumulator mit Plattenstapeln, die aus einer Vielzahl von mit zwischen benachbarten Elektroden liegenden Separatoren voneinander beabstandet übereinander gestapelten Elektrodenplatten gebildet sind.

Herkömmliche Elektrodenplattenstapel werden aus einer Vielzahl in Separatoren eingetaschte Elektrodenplatten gebildet, die anschließend in ein Zellgefäß eingeführt werden. Die Weite des Zellgefäßes und damit das Spiel des Elektrodenplattenstapels im Zellgefäß wird herkömmlicherweise durch im Zellgefäß angespritzte Rippen bestimmt. Um das Einschieben eines Elektrodenplattenstapels in ein Zellgefäß zu erleichtern, wird herkömmlicherweise eine den Elektrodenplattenstapel teilweise umschließende Polypropylenfolie genutzt.

Ein Problem bei Bleiakkumulatoren stellt zudem das Wachstum der positiven Gitterplatten dar. Dieses Wachstum tritt insbesondere bei Gitterplatten aus Streckmetall auf, da diese keine stabilisierenden Rahmen besitzen.

Das Bandagieren von Elektrodenplattenstapeln mindestens an den Kanten ist bekannt. Die Bandagen können im Fertigungsprozess leicht um die sehr stabilen Elektrodenplatten herumgelegt und verklebt werden. Derartige Verfahren sind beispielsweise in der EP 1 148 569 A2 beschrieben. Die verklebten Bandagen sind langzeitstabil, da sie auf den Elektrodenplatten prismatischer Batterien gut haften und der mechanische Aufbau der prismatischen Akkumulatoren eine Befestigung der Bandagen ohne Gefahr der Verformung der Elektrodenplatten erlaubt.

Aus der JP 62-278771 A und der JP 58-018882 A ist das Einschließen eines Elektrodenplattenstapels in eine Tasche aus Schrumpffolienmaterial bekannt. Durch die Wärmebehandlung der Tasche zieht sich diese zusammen und legt sich eng um den Elektrodenplattenstapel herum.

In dem US-Patent 6,780,540 B2 ist ein mit Federelementen versehenes Gehäuse für Elektrodenplattenstapel beschrieben. Durch die Führungen wird der Elektrodenplattenstapel seitlich sicher gehalten.

Ausgehend hiervon ist es Aufgabe der vorliegenden Erfindung, einen verbesserten Akkumulator zu schaffen bei dem das Einführen eines Elektrodenplattenstapels erleichtert und die Betriebsfestigkeit erhöht wird.

Die Aufgabe wird mit dem Akkumulator der eingangs genannten Art dadurch gelöst, dass ein Elektrodenplattenstapel mit mindestens einem den Elektrodenplattenstapel jeweils umfassenden thermoplastisch verschweißbaren Band zusammengehalten wird.

Durch die Bandagierung der Elektrodenplattenstapel mit thermoplastisch verschweißbaren Bändern wird erreicht, dass die Elektrodenplattenstapel leicht in ein Zellgefäß einführbar sind und dauerhaft unter Druck stehen. Dadurch wird die Gefahr des Abschlammens der positiven Masse im Betrieb verringert und die Zyklenfähigkeit des Akkumulators stark verbessert. Auch die Rüttelfestigkeit wird verbessert.

Die Endabschnitte der Bänder können nach dem Umschlagen um einen Elektrodenplattenstapel einfach verschweißt werden. Es hat sich gezeigt, dass durch die Verwendung thermoplastisch verschweißbarer Bänder sichergestellt wird, dass die leicht verformbaren Kanten der Elektrodenplatten, die z. B. bei Bleiakkumulatoren aus leicht verformbaren Bleimaterial bestehen, bei dem Prozess des Umschlagens und thermoplastischen Verschweißens geschont werden. Zudem ist keine Haftung der thermoplastischen Bänder an den Elektrodenplatten erforderlich, wie beim herkömmlichen Verkleben der Bandagen für prismatische Akkumulatoren.

Durch die Nutzung thermoplastisch verschweißbarer Bänder und die thermoplastische Verschweißung der übereinander liegenden Abschnitte eines Bandes wird somit sichergestellt, dass bei dem Umschlagen und bei der Verschweißung der Bandagen die Kanten der leicht verformbaren Elektrodenplatten nicht beschädigt werden und die Verbindung der Bandageenden der Säure im Langzeitbetrieb standhält und auch den thermischen Bedingungen gewachsen ist.

Daher sollten die thermoplastisch verschweißbaren Bänder sowie die Verschweißung säureresistent sein.

Besonders vorteilhaft ist es, wenn die Bänder eine Breite im Bereich von 5 mm bis 50 mm und bevorzugt von 20 mm bis 30 mm haben. Es hat sich herausgestellt, dass in diesem Bereich die Gefahr der Beschädigung der Kanten der Elektrodenplatten bestmöglich verringert ist und zudem die Oberfläche der äußeren Elektroden im noch vertretbaren Maß verringert ist. Die gewählte Breite stellt somit einen bestmöglichen Kompromiss dar.

In einer Ausführungsform erstrecken sich die Bänder an den Außenrandbereichen der Elektrodenplattenstapel vertikal über die Bauhöhe der Elektrodenplatten. Diese Ausführungsform hat den Vorteil, dass hierdurch Beschädigungen der Außenrandbereiche beim Einschieben der Elektrodenplattenstapel in das Zellgefäß eines Batteriekastens bestmöglich verhindert werden. Bei dieser Ausführungsform wird das Einführen des Elektrodenplattenstapels in ein Zellgefäß erheblich erleichtert.

Eine andere Ausführungsform sieht vor, dass sich mindestens eines Band bezogen auf die Breite der Elektrodenplatten im mittleren Bereich der Elektrodenplattenstapels vertikal über die Bauhöhe der Elektrodenplattenstapels erstreckt. D. h., dass eine Bandage im mittleren Bereich vom Boden bis zum Deckel erstreckt. Diese Ausführungsform wirkt dem Wachstum der Elektrodenplatten im flexibelsten und damit kritischsten mittleren Bereich der Elektrodenplatten optimal entgegen. Zudem dient die Bandage aufgrund ihrer Ausrichtung als Einschubhilfe.

Eine andere Ausführungsform sieht vor, dass sich mindestens ein Band bezogen auf die Bauhöhe des Elektrodenplattenstapels im mittleren Bereich des Elektrodenplattenstapels horizontal über die Breite des Elektrodenplattenstapels erstreckt. Bei dieser Ausführungsform wird der Elektrodenplattenstapel durch die Bandage unter einem relativ gleichmäßigen Druck gehalten.

Die drei beschriebenen Ausführungsformen können einzeln oder in beliebiger Kombination miteinander eingesetzt werden.

Besonders vorteilhaft ist, wenn die übereinander liegenden Abschnitte eines Bandes jeweils ultraschallverschweißt sind. Das Verschweißen von thermoplastischen Bändern mittels Ultraschallsonotrode ist aus der Verpackungstechnik hinreichend bekannt und in automatisierten Verfahren beherrschbar. Die Ultraschallverschweißung ist auch ausreichend stabil und säurefest. Alternativ ist auch eine thermische oder Vibrationsverschweißung denkbar.

Besonders vorteilhaft ist es, wenn die Bänder aus Polypropylen (PP) Polyethylen (PE) oder Polyethylenterephthalat (PET) sind.

Die Erfindung wird nachfolgend anhand von Ausführungsbeispielen mit den beigefügten Zeichnungen näher erläutert. Es zeigen:
- Figur 1 -: perspektivische Ansicht eines Elektrodenplattenstapels mit thermoplastisch verschweißten Bändern an den Außenrandbereichen;
- Figur 2 -: perspektivische Ansicht eines Elektrodenplattenstapels mit thermoplastisch verschweißtem Band im mittleren Bereich;
- Figur 3 -: perspektivische Ansicht eines Elektrodenplattenstapels mit thermoplastisch verschweißtem Band im mittleren Bereich.

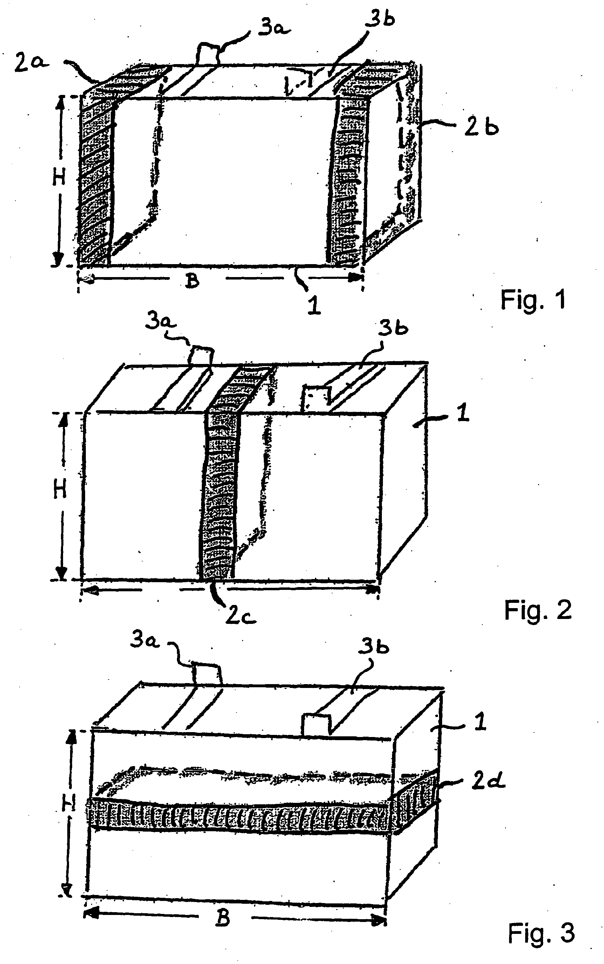

Die Figur 1 lässt eine Ausführungsform eines Elektrodenplattenstapels 1 zum Einbau in ein Zellgefäß eines Gehäuses eines Bleiakkumulators erkennen. Der Elektrodenplattenstapel 1 ist in an sich bekannter Weise aus einer Vielzahl von mit zwischen benachbarten Elektrodenplatten liegenden Separatoren voneinander beabstandet übereinander gestapelten Elektrodenplatten gebildet.

Die Separatoren können hierbei in an sich bekannter Weise als Taschen ausgebildet sein, in die Elektrodenplatten hineingelegt sind.

Der Elektrodenplattenstapel 1 wird über die Breite B des Elektrodenplattenstapels 1 gesehen an den beiden Außenrandbereichen jeweils mit einem thermoplastisch verschweißbaren Band 2a, 2b aus Polypropylen PP umfasst. Die Bänder 2a, 2b sind an übereinander liegenden Abschnitten eines Bandes 2a, 2b jeweils thermoplastisch beispielsweise durch Ultraschallverschweißung, thermisches Verschweißen oder Vibrationsschweißen miteinander verbunden. Die Bänder 2a, 2b erstrecken sich vertikal über die Bauhöhe H des Elektrodenplattenstapels 1 vom Boden bis zum Deckelbereich, an dem sich die Ableiter 3a, 3b für die positiven und negativen Elektrodenplatten befinden, die jeweils mit den positiven Elektrodenplatten bzw. negativen Elektrodenplatten und den entsprechenden Anschlusspolen elektrisch verbunden sind.

Das Bandagieren (Bandarolieren) der Elektrodenplattenstapel 1 erfolgt nach dem Übereinanderstapeln einer Anzahl getaschter Elektrodenplattensätze mit abwechselnd positiven und negativen Elektrodenplatten und zwischenliegenden Separatoren in Form von Taschen. Vor oder nach dem Bandagieren erfolgt dann der Anguss der Ableiter 3a, 3b (Verbinder).

Durch die Bandagen können die Elektrodenplattenstapel 1 mit minimalem Satzspiel in das Zellgefäß eingeschoben werden. Durch die dargestellten vertikalen Bandagen steht eine Einschiebehilfe zur Verfügung und die Reibung der Außenplatten an der Zellwand wird minimiert. Dadurch, dass die Bandagen sich an den Außenkanten der Elektrodenplatten befinden, wird ein Hochschieben der Außenplatten beim Einschieben des Elektrodenplattenstapels 1 in das Zellgefäß verhindert. Die Ecken der Elektrodenplatten können zudem nicht mehr umgebogen werden.

Die Bandagen haben zudem den Vorteil, dass der eingebaute Elektrodenplattenstapel 1 dauerhaft unter Druck steht. Hierdurch wird die Gefahr des Abschlammens der positiven Masse reduziert und die Zyklenfähigkeit des Bleiakkumulators stark verbessert. Zudem wird die Rüttelfestigkeit wesentlich verbessert.

Die Nutzung der thermoplastisch verschweißbaren Bänder 2 als Bandagen für Elektrodenplattenstapel 1 hat zudem insbesondere bei AGM-Batterien mit festgelegtem Elektrolyt den Vorteil, dass auf den Einsatz eines Vliesmaterials auf der Separatorenoberfläche verzichtet werden kann.

Aufgrund der Fixierung des Elektrodenplattenstapels 1 durch die Bandage kann zudem auf im Zellgefäß herkömmlich angespritzte Rippen verzichtet werden, so dass die Batteriekästen einfacher aufgebaut werden können.

Die Bandagen haben zudem den Vorteil, dass die Komplexität bei Separatoren verringert werden kann. Bei einer Bandage ist es nicht mehr erforderlich, dass das Spiel über die Variation der Separatordicke einzustellen.

Dadurch, dass die Elektrodenplattenstapel 1 durch die Bandagen unter Druck gehalten werden, müssen die Wände der Zellgefäße nicht mehr so dick sein, wie bislang. Durch die stabilen Wände muss herkömmlicherweise eine Steifigkeit erzielt werden, so dass ein über die Wände wirkender Druck die Elektrodenplatten eines Elektrodenplattenstapels zusammenpresst. Durch die Bandage entfällt das Erfordernis von stabilen Wänden und auch die Notwendigkeit des Einsatzes von mit Glasfasern oder Talkum gefüllten Materialien, die bislang für Stabilität und Zyklenfestigkeit sorgen.

Die Bandagen der Elektrodenplattenstapel 1 haben zudem den Vorteil, dass Wachstum von positiven Elektrodenplatten aus Streckmetallgittern, die keinen Rahmen aufweisen, wirkungsvoll unterdrückt wird.

Die Figur 2 lässt eine Ausführungsform eines Elektrodenplattenstapels 1 erkennen, bei dem eine Bandage mit einem thermoplastisch verschweißbaren Band 2c bezogen auf die Breite B des Elektrodenplattenstapels 1 im mittleren Bereich vertikal über die Bauhöhe H vorgesehen ist. Hierdurch wird ein ausreichender Druck insbesondere im mittleren Bereich sichergestellt.

Die Figur 3 lässt eine andere Ausführungsform erkennen, bei der eine Bandage aus einem thermoplastisch verschweißbaren Band 2d im bezogen auf die Bauhöhe H des Elektrodenplattenstapels 1 mittleren Bereich vorgesehen ist, wobei sich die Bandage horizontal über die Breite des Elektrodenplattenstapels 1 erstreckt.

Die dargestellten Bandagen können beliebig miteinander kombiniert werden. Die Breite der thermoplastischen Bänder 2 sollte im Bereich von etwa 20 mm bis 30 mm liegen. Die Zugkraft der Bandagen auf die Elektrodenplatten eines Elektrodenplattenstapels 1 lässt sich variabel nach Bedarf einstellen und sollte so gewählt werden, dass sie dem Druck des Elektrodenplattenstapels 1 bei Volumenarbeit standhält. Durch die Nutzung von Bändern 2 aus Polypropylen PP oder ähnlichen säurefesten thermoplastisch verschweißbaren Materialien wird eine einfache Herstellung der Bandage ohne Gefahr der Beschädigung der Kanten der Elektrodenplatten erreicht. Die Bandage und die Verschweißung sind langzeitstabil und halten den thermischen Belastungen sowie den Säureeinflüssen stand.

## Patentansprüche

1. Akkumulator mit Elektrodenplattenstapeln (1), die aus einer Vielzahl von mit zwischen benachbarten Efektrodenplatten liegenden Separatoren voneinander beabstandet übereinander gestapelten Elektrodenplatten gebildet sind, wobei ein Elektrodenplattenstapel (1) mit mindestens einem den Elektrodenplattenstapel (1) jeweils umfassenden thermoplastisch verschweißbaren Band (2) zusammengehalten wird, **dadurch gekennzeichnet, dass** übereinanderliegende Abschnitte eines Bandes (2) thermoplastisch miteinander verschweißt sind.

2. Akkumulator nach Anspruch 1, **dadurch gekennzeichnet, dass** die thermoplastisch verschweißbaren Bänder (2) und die Verschweißung säureresistent sind.

3. Akkumulator nach einem der Ansprüche 1 oder 2, **dadurch gekennzeichnet, dass** die Bänder (2) eine Breite im Bereich von 5 mm bis 50 mm und bevorzugt von 20 mm bis 30 mm haben.

4. Akkumulator nach einem der Ansprüche 1 bis 3, **dadurch gekennzeichnet, dass** Bänder (2) sich an den Außenrandbereichen der Elektrodenplattenstapel (1) vertikal über die Bauhöhe (H) der Elektrodenplatten erstrecken.

5. Akkumulator nach einem der Ansprüche 1 bis 4, **dadurch gekennzeichnet, dass** sich mindestens ein Band (2) bezogen auf die Breite (B) der Elektrodenplatten im mittleren Bereich der Elektrodenplattenstapel (1) vertikal über die Bauhöhe der Elektrodenplattenstapel (1) erstreckt.

6. Akkumulator nach einem der Ansprüche 1 bis 5, **dadurch gekennzeichnet, dass** sich mindestens ein Band (2) bezogen auf die Bauhöhe (H) der Elektrodenplatten im mittleren Bereich der Elektrodenplattenstapel (1) horizontal über die Bauhöhe der Elektrodenplattenstapel (1) erstreckt.

7. Akkumulator nach einem der vorhergehenden Ansprüche, **dadurch gekennzeichnet, dass** die übereinander liegenden Abschnitte eines Bandes (2) jeweils ultraschallverschweißt, thermisch verschweißt oder vibrationsverschweißt sind.

8. Akkumulator nach einem der vorhergehenden Ansprüche, **dadurch gekennzeichnet, dass** die Bänder (2) aus Polypropylen (PP), Polyethylen (PE) oder Polyethylenterephthalat (PET) sind.

9. Akkumulator nach einem der vorhergehenden Ansprüche, **dadurch gekennzeichnet, dass** der Akkumulator ein Bleiakkumulator ist und die Elektrodenplatten aus einer Bleilegierung gebildet sind.

## Claims

1. Rechargeable battery having electrode plate stacks (1) which are formed from a multiplicity of electrode plates which are stacked one on top of the other, at a distance from one another, with separators located between adjacent electrode plates, wherein an electrode plate stack (1) is held together by at least one strip (2) which can be welded thermoplastically and in each case surrounds the electrode plate stack (1), **characterized in that** sections which are located one on top of the other of a strip (2) are thermoplastically welded to one another.

2. Rechargeable battery according to Claim 1, **characterized in that** the strips (2) which can be thermoplastically welded, and the weld, are acid-resistant.

3. Rechargeable battery according to one of Claims 1 or 2, **characterized in that** the strips (2) have a width in the range from 5 mm to 50 mm, and preferably from 20 mm to 30 mm.

4. Rechargeable battery according to one of Claims 1 to 3, **characterized in that** strips (2) extend on the outer edge areas of the electrode plate stacks (1) vertically over the physical height (H) of the electrode plates.

5. Rechargeable battery according to one of Claims 1 to 4, **characterized in that** at least one strip (2) extends vertically over the physical height of the electrode plate stacks (1), in the central area of the electrode plate stacks (1) with respect to the width (B) of the electrode plates.

6. Rechargeable battery according to one of Claims 1 to 5, **characterized in that** at least one strip (2) extends horizontally over the physical height of the electrode plate stacks (1), in the central area of the electrode plate stacks (1) with respect to the physical height (H) of the electrode plates.

7. Rechargeable battery according to one of the preceding claims, **characterized in that** the sections, which are located one on top of the other, of a strip (2) are each ultrasound-welded, thermally welded or vibration-welded.

8. Rechargeable battery according to one of the preceding claims, **characterized in that** the strips (2) are composed of polypropylene (PP), polyethylene (PE) or polyethylene terephthalate (PET).

9. Rechargeable battery according to one of the preceding claims, **characterized in that** the rechargeable battery is a lead-acid rechargeable battery, and the electrode plates are formed from a lead alloy.

## Revendications

1. Accumulateur comportant des piles de plaques d'électrodes (1) composées d'un grand nombre de plaques d'électrodes empilées les unes sur les autres, en étant écartées par des séparateurs placés entre les plaques d'électrodes voisines,
une pile de plaques d'électrodes (1) étant maintenue réunie par au moins une bande (2) thermoplastique, soudée, entourant la pile de plaques d'électrodes (1),
**caractérisé en ce que**
les segments superposés d'une bande (2) sont soudés l'un à l'autre de manière thermoplastique.

2. Accumulateur selon la revendication 1,
**caractérisé en ce que**
les bandes (2) thermoplastiques soudables et les soudures résistent à l'acide.

3. Accumulateur selon la revendication 1 ou 2,
**caractérisé en ce que**
les bandes (2) ont une largeur de l'ordre de 5 mm à 50 mm et de préférence comprise entre 20 mm et 30 mm.

4. Accumulateur selon les revendications 1 à 3,
**caractérisé en ce que**
les bandes (2) s'étendent sur les zones des bords extérieurs de la pile de plaques d'électrodes (1) verticalement sur leur hauteur (H).

5. Accumulateur selon les revendications 1 à 4,
**caractérisé en ce qu'**
au moins une bande (2) s'étend par rapport à la largeur (B) des plaques d'électrodes, dans la zone centrale de la pile de plaques d'électrodes (1), verticalement sur sa hauteur.

6. Accumulateur selon les revendications 1 à 5,
**caractérisé en ce qu'**
au moins une bande (2) s'étend par rapport à la hauteur (H) des plaques d'électrodes dans la zone centrale de la pile de plaques d'électrodes (1), horizontalement sur sa hauteur.

7. Accumulateur selon les revendications précédentes,
**caractérisé en ce que**
les segments superposés d'une bande (2) sont soudés aux ultrasons, de manière thermique ou par des vibrations.

8. Accumulateur selon les revendications précédentes,
**caractérisé en ce que**
les bandes (2) sont en polypropylène (PP), en polyéthylène (PE) ou en polyéthylène téréphtalate (PET).

9. Accumulateur selon les revendications précédentes,
**caractérisé en ce que**
l'accumulateur est un accumulateur au plomb et les plaques d'électrodes sont en un alliage de plomb.
